# EUROPEAN PATENT APPLICATION

(11) **EP 2 770 733 A1**
(43) Date of publication of application: **27.08.2014**
(21) Application number: 14154216.7
(22) Date of filing: 06.02.2014
(51) Int. Cl.: H04N 7/18

(54) **A system and method to create evidence of an incident in video surveillance system**

(30) Priority: 26.02.2013 US 201313777320
(71) Applicant: Honeywell International Inc., Morristown, NJ 07962-2245 (US)
(72) Inventor: Subbian, Deepakumar, Morristown, NJ New Jersey 07962-2245 (US); Meganathan, Deepak Sundar, Morristown, NJ New Jersey 07962-2245 (US); Salgar, Mayur, Morristown, NJ New Jersey 07962-2245 (US)
(74) Representative: Houghton, Mark Phillip

(57) **Abstract**

A method and apparatus. The method includes the steps of a security camera capturing a panoramic field of view of a secured area, separating portions of the panoramic field of view into a plurality of sub-views that each depict at least some time-related portion of an event detected within the secured area and simultaneously displaying the plurality of sub-views within separate respective windows of a display.

## Description

### FIELD

The field relates to security systems and more particularly to security cameras used within security systems.

### BACKGROUND

Security systems and the security cameras used within such systems are well known. In many cases, the security cameras are monitored in real time by security personnel for intruders and/or other threats. Images from the cameras may also be saved in a database for later reference.

The security cameras may also be provided with a motion detection capability. In this case, a processor within the camera or associated security control panel may compare successive image frames for changes. Upon detection of changes, the processor may send a notification to a guard monitoring the camera.

In some cases, the security cameras of security systems in remote locations may not be monitored by security personnel in real time. In these cases, motion detection may be used as a method of directly detecting intruders. The detection of motion may also be used to initiate the recording of images from one or more cameras into memory.

When video from a security camera is saved into memory, that saved video may provide important information used in reconstructing events occurring within the secured area. This is especially the case where the event is not detected and viewed by security personnel contemporaneously with the event. However, even when the event is detected and viewed by personnel at the time of the event, the video may be difficult to understand and interpret. Accordingly, a need exists for better methods of analyzing saved video.

### BRIEF DESCRIPTION OF THE DRAWINGS

FIG. 1 is a block diagram of a security system shown generally in accordance with an illustrated embodiment; and
FIG. 2 depicts a video clip that simultaneously displays panoramic views and enlarged sub-views of the panoramic view.

### DETAILED DESCRIPTION OF AN ILLUSTRATED EMBODIMENT

While embodiments can take many different forms, specific embodiments thereof are shown in the drawings and will be described herein in detail with the understanding that the present disclosure is to be considered as an exemplification of the principles hereof, as well as the best mode of practicing same. No limitation to the specific embodiment illustrated is intended.

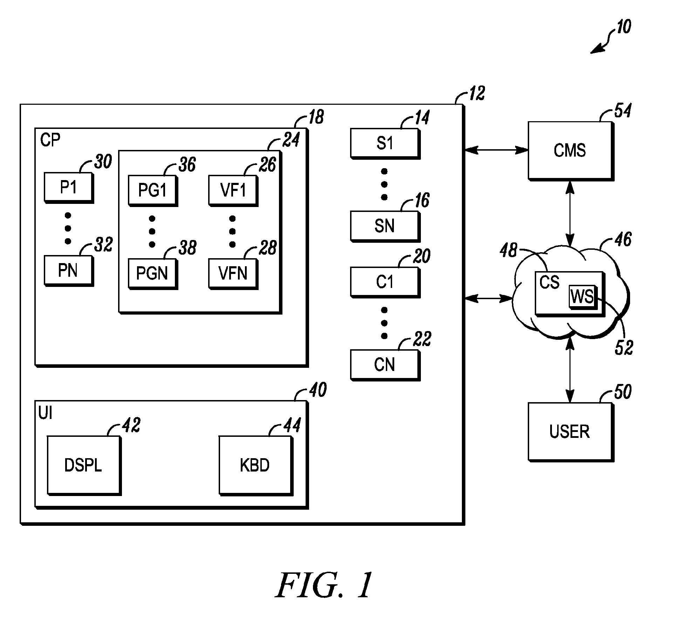

FIG. 1 depicts a security system 10 shown generally in accordance with an illustrated embodiment. Included within the security system 10 may be one or more sensors 14, 16 that detect events within a secured area 12. The sensors 14, 16 may be door or window switches used to detect intruders entering the secured area 12. The sensors 14, 16, in turn, may be coupled to a security system control panel 18.

Also included within the security system 10 may be one or more cameras 20, 22. Video frames from the cameras 20, 22 may be saved continuously or intermittently in a computer readable medium (memory) 24 into one or more files 26,28.

At least one of the cameras may be a panoramic camera with a field of view that capturing images in all directions within a single hemisphere. This may be accomplished using a fish-eye lens or via a camera with arrays of pixelated light sensors arranged in a hemisphere.

Included within the control panel 18 may be one or more processing apparatus (processors) 30, 32 operating under control of one or more computer programs 36, 38 loaded from memory 24. As used herein, reference to a step performed by a computer program 36, 38 is also a reference to the processor 30, 32 executing that program 36, 38.

The saving of sequences of video frames from each of the cameras 20, 22 may be accomplished via a processor 30, 32 located within one or more of the cameras 20, 22 or within the control panel 18. Under one illustrated embodiment, the processor may operate as a motion detection processor by comparing the pixel values of video frames of a sequence and saving a sequence of video frames into memory upon the detection of motion and for a predetermined period thereafter.

Alternatively, a processor may monitor the sensors 14, 16. Upon detection of the activation of one of the sensors, the processor may select a camera with a field of view covering the sensor and record video from that camera.

As a still further alternative, a processor may monitor a user interface 40. In this case, video from one or more of the cameras may be shown on a display 42 of the use interface. Upon the selection of the appropriate key(s) on a keyboard 44, video from one or more of the cameras may be saved into a file 26, 28.

In the event of an intrusion by an unauthorized party or of some other security breach, the saved video can be used as evidence of the type of intrusion and to identify the intruder. However, video is often not self-explanatory when it is to be used as evidence. One reason for this situation is that prior systems have not provided any mechanism to identify an area of interest in a video clip that is to be exported from the security system and used as evidence. Because of this deficiency, a great deal of time is often required by investigators to understand the content of the exported clip.

Under the illustrated embodiment, captured video is enhanced by simultaneously presenting enlarged sub-views of the video along with the video. This has the advantage of both alerting the observer to the location of interest and also providing a better view of the event occurring at that location.

In this regard, a user (e.g., a security guard, other authorized person, etc.) may retrieve video sequences from one or more of the files 26, 28, segment sub-views (e.g., pixel groups) from each of the frames and perform separate, respective pan-tilt-zoom operations on each of the sub-views for presentation to a user. The separate pan-tilt-zoom operations on each of the pixel groups provides a sub-view that allows a viewer to better observe events occurring within each of the panoramic views.

The ability to provide sub-views of the originally captured images offers a number of advantages. For example, assume that there are two different people, objects or cars traveling in two different directions within a field of view of a camera. In this case, there would be no easy way to capture or highlight the incidents within the clip under prior methods. Similarly, in a convenience store there would be no way of separately highlighting activities at the point of sale (POS) terminal and customer activity (some distance away from the terminal) even though they are both within the same field of view of a security camera.

As discussed in more detail below, the system 10 operates by creating a video clip file with 360 degree navigation information that gives a different perspective of the incident to investigators. For example, assume that a closed circuit television (CCTV) operator (or store owner) wants to create a video clip of an incident where an intruder has entered a shop and leaves the shop after shoplifting. This clip may have a duration of 5 minutes or so. In this case, the CCTV operator can create a new video clip by recording pan-tilt-zoom (PTZ) coordinates of areas of interest within the original field of view along with the original view. In this case, each of the PTZ coordinates define a sub-view of the original video that identifies an area of interest. While defining the PTZ coordinates, the operator can zoom (or perform PTZ) towards the intruder and follow him within the 360 degree view.

In this way, the operator can define similar PTZ coordinate recordings for each sub-view with multiple angles or from different points of view. For example, one could be a top view (fish eye) and another one could be a normal view (front or side view).

In each case, only one video clip (file) will be exported with multiple view coordinates recorded within it. Once this clip is played, it will show 3 or 4 views (as created from the original video and sub-views) of the same incident with multiple view angles/recorded PTZ coordinates.

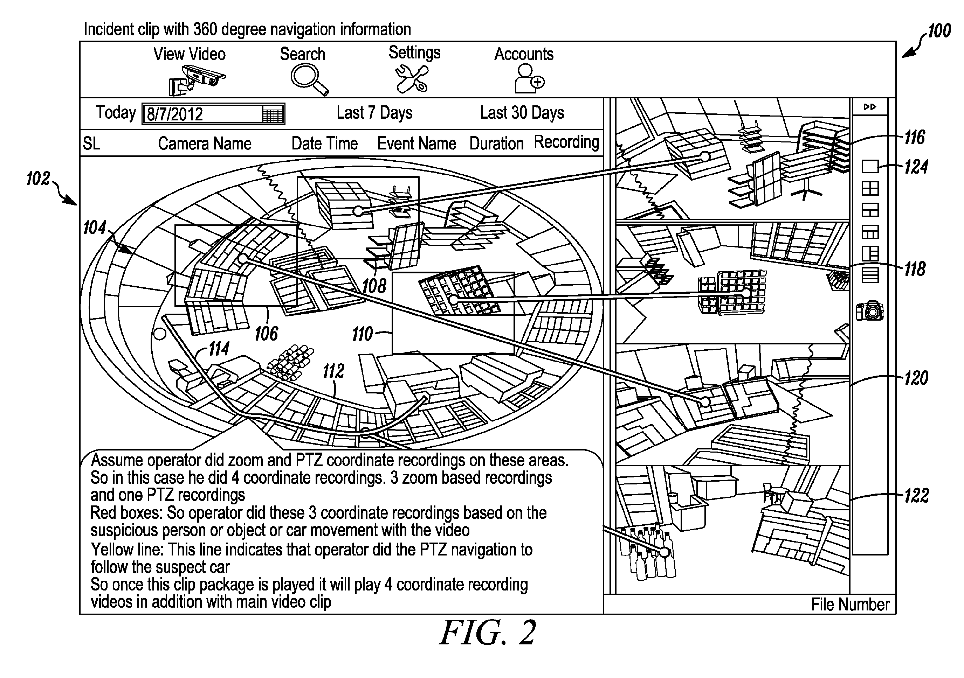

FIG. 2 depicts a more detailed example. In this regard, a screen 100 is shown on the display 42 of the user interface 40. Located on the screen 100 is a large window 102 that shows a frame of the panoramic view initially captured by one of the cameras. Also located on the screen 100 may be one or more smaller windows 116, 118, 120, 122 that each show sub-views of the initially captured panoramic view that is shown in the large window 102.

A user may then designate pixel groups for each of the sub-views using a cursor 104. The user may do this using a mouse to place the cursor in a first location, clicking a switch on the mouse and dragging the cursor diagonally. The position of the cursor may be tracked by a tracking processor to define a bounding box 106, 108, 110, 112 that surrounds each group of pixels of the sub-view. The coordinates of each of the bounding boxes 106, 108, 110, 112 may be transferred to a location processor that determines a set of pan-tilt-zoom coordinates that define the sub-view. FIG. 2, in fact, shows a bounding box 106, 108, 110, 112 that in the original view that identifies the pixels that are transferred to and shown in the corresponding sub-view depicted in each of the smaller boxes 116, 118, 120, 122.

The user may also use the cursor 104 to select each of the smaller boxes 116, 118, 120, 122 one-at-a-time and independently adjust a pan, tilt and zoom values of each sub-view. In this regard, the user may select a respective button 124 on the screen 100 or keyboard 44 to adjust the pan, tilt or zoom of the sub-view via a PTZ processor.

The pan or tilt may be adjusted to fine tune the location of the sub-view or to adjust the pan and/or tilt based upon a time factor. The time factor may be based upon the pan or tilt necessary to maintain a detected event (e.g., a person walking across a room, a car traversing a parking lot, etc.) in the center of the sub-view across the sequence of frames.

Once the PTZ coordinates have been defined for each sub-view, a clip processor may save the video information as a video clip file 26, 28. In this regard, the video clip file 26, 28 may include the sequence of frames of the panoramic view originally captured by the camera 20, 22. The video clip file 26, 28 may also contain a set of PTZ coordinates for each sub-view. The PTZ coordinates may be defined by a single set of values or a different set of values for each frame of the panoramic view based upon movement of the subject of the event.

Once created, the video clip file 26, 28 may be uploaded through the Internet 46 to one or more programmed processors 30, 32 of a cloud server 48. Access to the video clip file may be provided via a website 52. Users may access the video clip file through a portable user device 50 or through a central monitoring station 54. In each case, a video processor may display the video sequence of the panoramic view and sub-views simultaneously based upon the PTZ coordinates associated with each frame.

In general, the video clip file 26, 28 allows a user to simultaneously show close-up views of two or more subjects associated within an event within a secured area along with corresponding, respective frames of the panoramic view. In the example shown in FIG. 2, the sub-views 116, 118, 120 show three different close-up views of a convenience store. The fourth sub-view 122 is based upon the use of a set of PTZ coordinates that change along the sequence of frames to track a suspicious person or intruder inside the convenience store. The track 114 shows the track of the sub-view across the sequence.

Optionally, the video clip files may contain a playback control including programs 36, 38 that execute on a processor 30, 32 of the panel 18 or device 50. The controls allow the video clip to be played, reversed, paused, step reversed, step forward, time jump, etc. In each case the main video in the main window 102 and sub-views 116, 118, 120, 122 all change in unison.

When creating a video clip, a user can select a desired salvo view (e.g., 2X2, 3X3, etc.). The created video can be exported as a package. The package may include a digital signature that allows the video clip and the utility (playback control) to play the video clip with the desired multiple view features described above.

Optionally, the subpanels 116, 118, 120,122 and the main panel 102 can be viewed in full screen mode. The video clips can be accessed through mobile applications (e.g., iPhone). The creator can give a customized name to each sub-view (PTZ coordinate recording) and the sub-view will show the title when it is played back (e.g., "Intruder Enters the Car").

From the foregoing, it will be observed that numerous variations and modifications may be effected without departing from the spirit and scope hereof. It is to be understood that no limitation with respect to the specific apparatus illustrated herein is intended or should be inferred. It is, of course, intended to cover by the appended claims all such modifications as fall within the scope of the claims.

## Claims

1. A method comprising:
a security camera capturing a panoramic field of view of a secured area;
separating portions of the panoramic field of view into a plurality of sub-views that each depict at least some time-related portion of an event detected within the secured area; and
simultaneously displaying the plurality of sub-views within separate respective windows of a display.

2. The method as in claim 1 further comprising a user manually identifying each of the plurality of sub-views within the panoramic field of view of the secured area.

3. The method as in claim 2 further comprising establishing a pan-tiltzoom value for each of the plurality of sub-views.

4. The method as in claim 3 further comprising providing a zoom level for one of the plurality of sub-views that is different from the captured panoramic field of view.

5. The method as in claim 4 further comprising an interface receiving the provided zoom level from a user.

6. The method as in claim 3 further comprising adjusting a pan value for at least one of the plurality of sub-views based upon a time-varying location of the event.

7. The method as in claim 6 further comprising continuously adjusting the pan value based upon a corresponding time value.

8. The method as in claim 1 further comprising a cloud server downloading the plurality of sub-views to a user for display.

9. An apparatus comprising:
a security camera that captures a panoramic field of view of a secured area;
a processor that separates portions of the panoramic field of view into a plurality of sub-views that each depict at least some time-related portion of an event detected within the secured area; and
a display that simultaneously displays the plurality of sub-views within separate respective windows of a display.

10. The apparatus as in claim 9 further comprising a user interface that receives a location of each of the plurality of sub-views within the panoramic field of view of the secured area.

11. The apparatus as in claim 10 wherein the location further comprises a box drawn around the sub-view.

12. The apparatus as in claim 10 wherein the location further comprises a pan-tilt-zoom value.

13. The apparatus as in claim 12 wherein the pan-tilt-zoom value further comprises a zoom level for one of the plurality of sub-views that is different from the captured panoramic field of view.

14. The apparatus as in claim 13 further comprising an interface that receives the zoom level from a user.

15. The apparatus as in claim 14 wherein the pan-tilt-zoom value further comprising a pan value for at least one of the plurality of sub-views that is adjusted based upon a time-varying location of the event.
